# EUROPÄISCHE PATENTANMELDUNG

(11) **EP 3 327 646 A1**
(43) Veröffentlichungstag der Anmeldung: **30.05.2018**
(21) Anmeldenummer: 17202481.2
(22) Anmeldetag: 20.11.2017
(51) Int. Cl.: G06Q 20/00

(54) **ELEKTRONISCHES WERTTRÄGERSYSTEM**

(30) Priorität: 29.11.2016 DE 102016122949
(71) Anmelder: Beckmann GmbH, 33161 Hövelhof (DE)
(72) Erfinder: Beckmann, Michael, 33161 Hövelhof (DE); Beckmann, Stefan, 33104 Paderborn (DE)
(74) Vertreter: Ostermann, Thomas

(57) **Zusammenfassung**

Die Erfindung betrifft ein System zur Freigabe einer Dienstleistung und/oder Waren für Nutzer an einem Nutzungsgerät mit einem elektronischen Wertträger enthaltend einen Speicher und eine Kommunikationsschnittstelle, mit einem Terminal enthaltend eine Speicher- und eine Kommunikationsschnittstelle zur Kommunikation mit dem elektronischen Wertträger, wobei die Kommunikationsschnittstelle des elektronischen Wertträgers und des Terminals als eine Funkschnittstelle ausgebildet sind, dass das Terminal derart ausgebildet ist, dass ein Freigabesignal zur Nutzung des Nutzungsgerätes ausschließlich aufgrund der Kommunikation mit dem elektronischen Wertträger erfolgt, dass der elektronische Wertträger einen Einwegspeicher mit einem Speicherinhalt aufweist, der ausschließlich wertmäßig und/oder zeitlich und/oder betragsmäßig in vorgegebene Stufen verringerbar ist zur Freigabe des Nutzungsgerätes, dass der Einwegspeicher in einem verschlüsselten Speicherbereich des Speichers abgespeichert ist, dass in dem Speicher eine Kundenkennung abgespeichert ist, die einem vorgegebenen Dienstleisterkreis und/oder einem vorgegebenen Nutzungsgerätekreis zugeordnet ist, dass das Terminal Mittel aufweist, derart, dass das Freigabesignal zur Nutzung des Nutzungsgerätes von dem Terminal an das Nutzungsgerät in Abhängigkeit von einem übereinstimmenden Vergleich der von der elektrischen Wertträger ausgelesenen Kundenkennung mit einer in dem Terminal abgespeicherten Kundenkennung abgesandt wird.

## Beschreibung

Die Erfindung betrifft ein System zur Freigabe einer Dienstleistung und/oder Waren für Nutzer an einem Nutzungsgerät mit einem elektronischen Wertträger enthaltend einen Speicher und eine Kommunikationsschnittstelle, mit einem Terminal enthaltend eine Speicher- und eine Kommunikationsschnittstelle zur Kommunikation mit dem elektronischen Wertträger.

Ferner betrifft die Erfindung einen elektronischen Wertträger sowie ein Terminal zur Freigabe einer Dienstleistung für Nutzer an einem Nutzungsgerät.

Ferner betrifft die Erfindung ein Verfahren zur Freigabe einer Dienstleistung für Nutzer an einem Nutzungsgerät, wobei ein Terminal mit einem elektronischen Wertträger kommuniziert.

Aus der DE 199 37 702 C1 ist ein geschlossenes Wertkartensystem mit Wertkarten für den Kauf von Waren oder den Bezug von Dienstleistungen bekannt. Die Wertkarten sind als kontaktbehaftete oder kontaktlose Chipkarten ausgebildet, die einen Speicher mit einem veränderbaren Wertinhalt aufweisen, der an bestimmten Akzeptanzstellen aufgewertet und an anderen Akzeptanzstellen abgewertet wird. Die Akzeptanzstellen gehören unterschiedlichen Betreibern, denen jeweils Zahlungen aus den Aufwertevorgängen zufließen und die gegen entsprechende Abwertevorgänge Dienstleistungen bereitstellen. Nachteilig an dem bekannten System ist, dass mehrere Rechnersysteme miteinander verbunden sein müssen, beispielsweise muss ein Rechner der Akzeptanzstelle mit einem Zentralrechner kommunizieren. Hierdurch ist der Aufwand relativ groß.

Aus der DE 20 2015 105 766 U1 ist eine elektronische Wertkarte mit einem Speicher zur Speicherung eines vorgegebenen Speicherinhalts bekannt, in dem ausschließlich Sachleistungen mit einem vorgegebenen Umfang gespeichert sind. Der Speicherinhalt repräsentiert somit nicht einen bestimmten Geldbetrag zum Kauf eines Gegenstandes, sondern die Sachleistung selbst. Diese elektronische Wertkarte ist ebenfalls in einem komplexen Rechnersystem eingebunden, da der Speicherinhalt auf- und abgewertet werden kann.

Es ist Aufgabe der Erfindung, ein System und ein Verfahren zur Freigabe einer Dienstleistung und/oder Waren sowie einen elektronischen Wertträger und ein Terminal derart anzugeben, dass der Systemaufwand auch unter Berücksichtigung der Abwehr von betrügerischen Angriffen reduziert wird, wobei die Handhabung und Bedienung für den Nutzer vereinfacht werden soll.

Zur Lösung dieser Aufgabe ist die Erfindung in Verbindung mit dem Oberbegriff des Patentanspruchs 1 dadurch gekennzeichnet, dass die Kommunikationsschnittstelle des elektronischen Wertträgers und des Terminals als eine Funkschnittstelle ausgebildet sind, dass das Terminal derart ausgebildet ist, dass ein Freigabesignal zur Nutzung des Nutzungsgerätes ausschließlich aufgrund der Kommunikation mit dem elektronischen Wertträger erfolgt, dass der elektronische Wertträger einen Einwegspeicher mit einem Speicherinhalt aufweist, der ausschließlich wertmäßig und/oder zeitlich und/oder betragsmäßig in vorgegebene Stufen verringerbar ist zur Freigabe des Nutzungsgerätes, dass der Einwegspeicher in einem verschlüsselten Speicherbereich des Speichers abgespeichert ist, dass in dem Speicher eine Kundenkennung abgespeichert ist, die einem vorgegebenen Dienstleisterkreis und/oder einem vorgegebenen Nutzungsgerätekreis zugeordnet ist, dass das Terminal Mittel aufweist, derart, dass das Freigabesignal zur Nutzung des Nutzungsgerätes von dem Terminal an das Nutzungsgerät in Abhängigkeit von einem übereinstimmenden Vergleich der von der elektrischen Wertträger ausgelesenen Kundenkennung mit einer in dem Terminal abgespeicherten Kundenkennung abgesandt wird.

Der besondere Vorteil des erfindungsgemäßen Systems besteht in der Kombination aus Einfachheit und Sicherheit. Ein elektronischer Wertträger weist einen Einwegspeicher auf, der ausschließlich in einer Richtung veränderbar ist, nämlich absteigend. Dies bedeutet, dass ein Speicherinhalt des Einwegspeichers von einem Startwert nur verringert werden kann, vorzugsweise bis zu einem Endwert, der Null beträgt. Der Speicherinhalt kann somit beispielsweise einen Wert repräsentieren, der eine Anzahl von durch ein Nutzungsgerät zu erbringende Dienstleistungen entspricht. Bei jeder Nutzung des Nutzungsgerätes verringert sich der Speicherinhalt stufig um den Wert 1. Ein Aufwerten dieses Speicherinhaltes ist nicht möglich. Der erfindungsgemäße elektronische Wertträger ist somit als ein Einwegwertträger ausgebildet, die vorzugsweise von einem die Dienstleistung anbietenden Dienstleister an den Nutzer gegen Bezahlung ausgegeben wird. Es handelt sich somit um ein vollkommen autarkes und geschlossenes System zwischen dem Dienstleister auf der einen Seite und dem Kunden auf der anderen Seite. Der elektronische Wertträger ist wesentlicher Bestandteil eines geschlossenen Einwegwertträgersystems, das nur aus dem elektronischen Wertträger und einem die Dienstleistung/Kauf freigebenden Terminal, das mit dem Nutzungsgerät gekoppelt ist, auf das mit der Wertänderung des elektronischen Wertträgers hinsichtlich einer Nutzung eingewirkt wird, besteht. Übergeordnete Serversysteme sind nicht erforderlich.

Vorzugsweise weist der elektronische Wertträger auf einer Ober-und/oder Unterseite nutzungsrelevante Informationen auf, so dass die Funktion dieses elektronischen Wertträgers für den Benutzer ersichtlich ist.

Nach einer Weiterbildung der Erfindung weist der Einwegwertträger einen Transponder mit einem Mikroprozessor und einem Speicher sowie eine Antenne auf. Der Transponder ist so ausgelegt, dass durch kurzzeitiges Anhalten des elektronischen Wertträgers an ein Terminal durch den Nutzer die Kommunikation mit dem Terminal und gegebenenfalls Freigabe des Nutzungsgerätes durch das Terminal gewährleistet ist.

Nach einer Weiterbildung der Erfindung weist der elektronische Wertträger zum einen in einem Speicher einen Einwegspeicher auf, der als ein Einwegzähler ausgebildet und stufig ausschließlich in eine Richtung veränderbar ist. Zum anderen weist der Speicher des elektronischen Wertträgers kundenbezogene und/oder nutzungsbezogene Daten auf.

Nach einer Weiterbildung der Erfindung weist der Speicher des elektronischen Wertträgers einen Protokollspeicher auf zur Speicherung von Protokolldaten, um den Werteverlauf des Einwegspeichers nachvollziehen zu können bzw. die Kommunikation zwischen dem elektronischen Wertträger und dem Terminal zu verbessern.

Zur Lösung der Aufgabe weist die Erfindung einen Terminal zur Freigabe einer Dienstleistung für Nutzer eines Nutzergerätes auf. Das Terminal weist ein Authentisierungsmodul auf, so dass es nach Senden eines Zufallssignals an den elektronischen Wertträger in Abhängigkeit von dem Antwortsignal die Identität und Authentizität des elektronischen Wertträgers ermitteln kann. Darüber hinaus weist das Terminal ein Lesemodul auf, so dass es in der Lage ist, verschlüsselte Speicherbereiche des elektronischen Wertträgers auszulesen. Hierdurch kann überprüft werden, ob der elektronische Wertträger berechtigt ist, die Freigabe des Nutzungsgerätes zu verlangen. Entsprechende Kundenkennungen und/oder Seriennummern und/oder Gültigkeiten des elektronischen Wertträgers sind nicht nur auf dem elektronischen Wertträger selbst, sondern auch auf dem Terminal gespeichert.

Zur Lösung der Aufgabe weist die Erfindung ein geschlossenes Wertträgersystem auf, das ausschließlich aus einem Einwegwertträger und einem Terminal zur Freigabe von Nutzungsgeräten besteht. Vorteilhaft kann hierdurch ein einfaches, autarkes und zuverlässiges Wertträgersystem bereitgestellt werden.

Zur Lösung dieser Aufgabe weist das erfindungsgemäße Verfahren die Merkmale des Patentanspruchs 12 auf.

Das erfindungsgemäße Verfahren zur Freigabe einer Dienstleistung für Nutzer an einem Nutzergerät umfasst die Kommunikation des Terminals mit dem elektronischen Wertträger, wobei nach der Authentisierung des elektronischen Wertträgers durch das Terminal dasselbe Zugriff auf einen verschlüsselten Speicherbereich des elektronischen Wertträger erhält. Das Terminal kann nun kundenspezifische und/oder nutzungsspezifische Daten bzw. Informationen auslesen und mit den in dem Terminal gespeicherten Daten vergleichen. Bei Übereinstimmung erfolgt eine Freigabe des Nutzungsgerätes, wobei vor Abgabe des Freigabesignals an das
Nutzungsgerät der Einwegzähler des elektronischen Wertträgers um eine Stufe verringert wird. Hierdurch wird sichergestellt, dass keine Nutzung des Nutzungsgerätes ohne Veränderung des Speicherinhalts des Wertträgers erfolgt.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

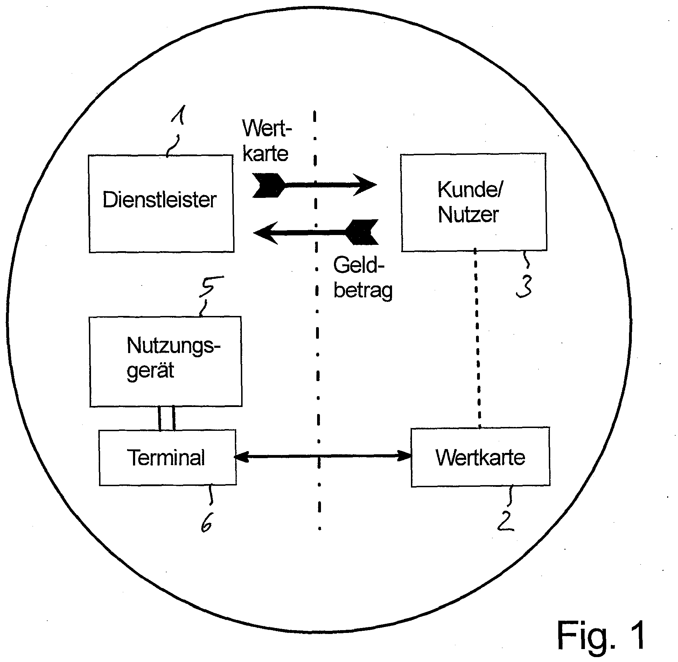

- Fig. 1: ein Überblicksschaubild eines erfindungsgemäßen geschlossenen Wertträgersystems,
- Fig. 2: eine schematische Blockdarstellung des erfindungsgemäßen Wertträgersystems
- Fig. 3: einen Ablaufplan über die Authentisierung zwischen einem Terminal und einem elektronischen Wertträger,
- Fig. 4: einen Ablaufplan über die Kommunikation zwischen dem Terminal und dem elektronischen Wertträger zur Feststellung einer Freigabe zur Nutzung eines Nutzungsgerätes und
- Fig. 5: eine schematische Blockdarstellung eines bevorzugten erfindungsgemäßen Wertträgersystems.

Ein erfindungsgemäßes Wertträgersystem ist als ein geschlossenes Wertträgersystem bzw. Wertkartensystem ausgebildet, wobei von einem Dienstleister 1 zum einen ein elektronischer Wertträger 2 einem Kunden 3 gegen Entrichtung einer Gebühr ausgegeben wird, so dass der Kunde 3 durch Betätigen des elektronischen Wertträgers 2 eine Dienstleistung des Dienstleisters 1 nutzen bzw. in Anspruch nehmen kann. Der Kunde 3 bzw. der Nutzer des elektronischen Wertträgers 2 verwendet den elektronischen Wertträger zur Nutzung eines Nutzungsgerätes 5 bzw. einer Dienstleistung des Dienstleisters 1. Zu diesem Zweck kommuniziert der elektronische Wertträger 2 mit einem Terminal 6, das mechanisch und/oder elektronisch mit dem Nutzungsgerät 5 fest verbunden ist. Das Wertträgersystem weist somit zwei Verantwortungsbereiche auf. Zum einen ist der Dienstleister 1 verantwortlich für das Nutzungsgerät 5 sowie das Terminal 6 und darüber hinaus für die Herausgabe des elektronischen Wertträgers 2 an den Kunden 3. Zum anderen ist der Kunde 3 verantwortlich für den elektronischen Wertträger 2, mittels er über das Terminal 6 das Nutzungsgerät 5 nutzen kann. Eine weitere Instanz bzw. Kommunikationspartner mit dem elektronischen Wertträger 2 bzw. dem Terminal 6 ist nicht erforderlich.

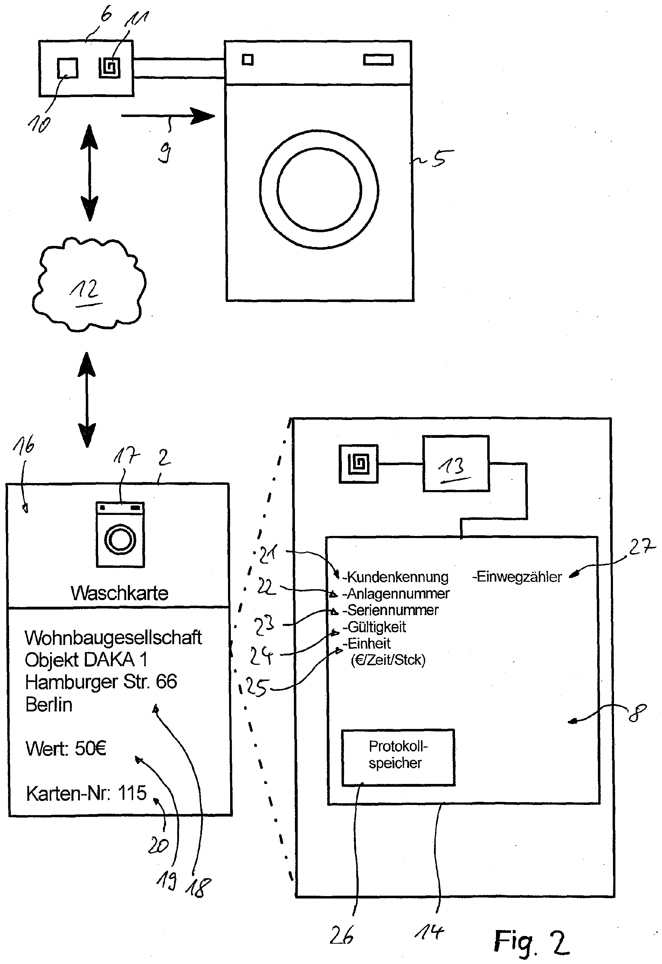

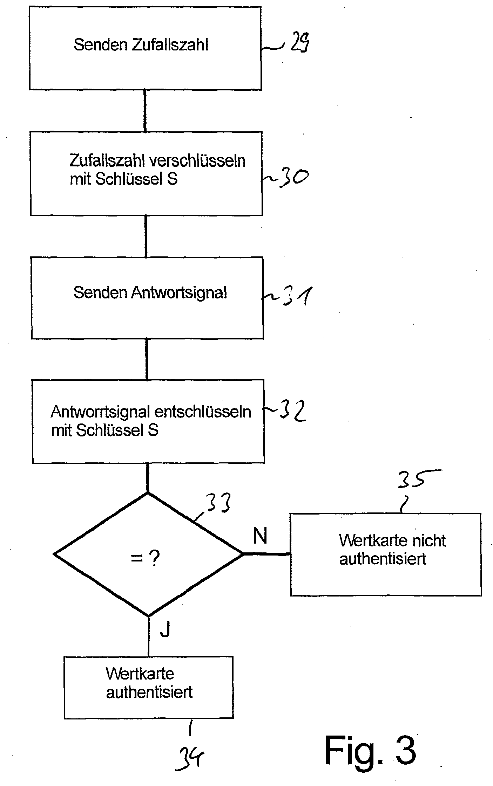

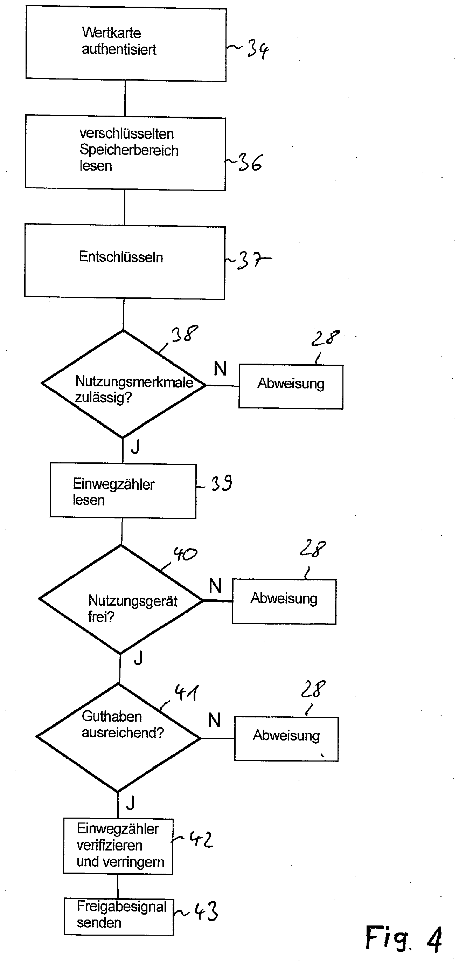

Nach einer bevorzugten Ausführungsform der Erfindung gemäß den Figuren 2, 3 und 4 wird das Wertträgersystem zur Nutzung einer Waschmaschine als Nutzungsgerät 5 eingesetzt. Die zu erbringende Dienstleistung besteht darin, dass dem Kunden 3 bzw. Nutzer ermöglicht wird, mit dem elektronischen Wertträger 2 die Waschmaschine 5 für eine bestimmte Anzahl von Waschvorgängen zu nutzen.

Die Waschmaschine 5 kann erst gestartet werden, wenn eine nicht dargestellte Steuereinheit der Waschmaschine 5 von dem Terminal 6 ein Freigabesignal 9 erhalten hat. Das Terminal 6 ist mechanisch und/oder elektrisch mit der Waschmaschine 5 gekoppelt. Elektrische Verbindungsleitungen des Terminals 6 sind vorzugsweise mit der Steuereinheit der Waschmaschine 5 verbunden. Das Terminal 6 weist vorzugsweise einen Mikroprozessor sowie einen Speicher auf, in dem ein Freigabeprogramm 10 (Freigaberoutine) zur Steuerung der Freigabe der Dienstleistung (Waschvorgang) für den Nutzer 3 enthalten ist. Darüber hinaus weist das Terminal 6 eine nicht dargestellte Anzeige bzw. Eingabe/Ausgabemittel auf. Ferner weist das Terminal 6 eine RFID-Antenne 11 auf, mittels derer eine drahtlose Kommunikation über ein Nahfeld 12 mit dem elektronischen Wertträger 2 gewährleistet ist. Zu diesem Zweck weist der elektronische Wertträger 2 einen Mikroprozessor 13, einen Speicher 14 sowie eine RFID-Antenne 15 auf. Der elektronische Wertträger 2 weist somit einen Transponder (Mikroprozessor 13, Speicher 14, RFID-Antenne 15) auf, der vorzugsweise in einem papierenen oder kunststoffartigen Körper eingebettet ist. Der Körper des elektronischen Wertträgers 2 kann scheckkartengroß ausgebildet sein mit einer Oberseite 16 und einer nicht dargestellten Unterseite, zwischen denen der Transponder 13, 14, 15 angeordnet ist. Der Wertträger 2 ist als eine Wertkarte ausgebildet. Auf der Oberseite 16 sind nutzungsrelevante Informationen der Wertkarte 2 aufgedruckt, beispielsweise ein Symbol für die zu nutzende Dienstleistung, hier ein Waschmaschinensymbol 17, eine Standortinformation 18 der Waschmaschine 5, ein Anfangswert 19 die elektronische .Wertkarte 2 sowie eine Kartennummer 20 der elektronischen Wertkarte 2.

Der Speicher 14 des elektronischen Wertträgers 2 ist vorzugsweise als ein verschlüsselter Speicherbereich 8 ausgebildet. In dem verschlüsselten Speicherbereich 8 sind neben einem Einwegspeicher 27 kundenbezogene und/oder nutzungsbezogene Daten gespeichert. Im vorliegenden Ausführungsbeispiel enthält der verschlüsselte Speicherbereich 8 eine Kundenkennung 21, eine Nutzungsgerätenummer (Anlagenummer) 22, mittels derer das Nutzungsgerät 7 erfasst ist, eine Seriennummer 23 des elektronischen Wertträgers 2, ein Gültigkeitsdatum 24 des elektronischen Wertträgers 2, eine Einheiteninformation 25, in der festgelegt ist, ob die Dienstleistung nach einem Geldbetrag, nach einer Zeit oder nach Stücken berechnet wird sowie einen Protokollspeicher 26 zur Protokollierung der Kommunikation zwischen dem elektronischen Wertträger 2 und dem Terminal 6.

Der Einwegspeicher 27 ist als ein Einwegzähler 27 ausgebildet, der nur in vorgegebenen Stufen wertmäßig und/oder zeitlich und/oder betragsmäßig verringert werden kann. Im vorliegenden Ausführungsbeispiel wurde der Einwegzähler 27 mit einem Geldbetrag von € 50,00, vorzugsweise von dem System-Hersteller, beschrieben. Der elektronische Wertträger 2 wird von dem System-Hersteller mit dem gewünschten Inhalt des Einwegzählers 27 geliefert, der dann erst nach Herausgabe des elektronischen Wertträgers 2 durch den Dienstleister 1 bei Nutzung der Dienstleistung, also durch Freigabe der Waschmaschine 5, in seinem Wert verringert wird. Das Guthaben auf dem elektronischen Wertträger 2 ist somit voraufgeladen. Das Guthaben kann nur verringert werden, wobei nach Ablauf des Guthabens der elektronische Wertträger 2 entsorgt werden kann. Der elektronische Wertträger 2 bzw. das Wertträgersystem ist relativ manipulationssicher, da der Einwegzähler 27 nur verringert, aber nicht erhöht werden kann. Zudem wird der elektronische Wertträger 2 nur einmalig aufgeladen, also in den Einwegzähler 27 der vorgegebene Wert bzw. das vorgegebene Guthaben eingeschrieben. Der elektronische Wertträger 2 kann nach Benutzung nicht wieder aufgeladen werden.

Vorteilhaft können hierdurch Verwaltungs- und Logistikkosten entfallen. Auch ist eine Abrechnung von laufenden Kosten, zum Beispiel durch eine Online-Anbindung zur Übermittlung von Buchungsdaten oder über eine Bank nicht erforderlich. Die Verwaltungs-, Geräte- und Installationskosten können hierdurch wesentlich reduziert werden.

Gemäß dem erfindungsgemäßen Wertträgersystem erhält der Dienstleister 1 bzw. Betreiber des Nutzungsgerätes 5 vor Herausgabe des elektronischen Wertträgers 2 an den Nutzer 3 den entsprechenden Geldbetrag für das Guthaben des Wertträgers 2, das vorher in den Einwegzähler 27 als Startwert eingeschrieben worden ist. Hiermit kann der Nutzer 3 eine bestimmte Anzahl von Waschvorgängen durchführen.

Der Einsatz des elektronischen Wertträgers 2 wird im Folgenden beschrieben. Der Nutzer 3 hält den elektronischen Wertträger 2 in das Nahfeld 12 des ortsfest angeordneten Terminals 6. Da sowohl das Terminal 6 als auch der elektronische Wertträger 2 eine RFID-Antenne 11, 15 als Kommunikationsschnittstelle aufweisen, erfolgt mittels des initiierten Freigabeprogramms 10 die Kommunikation zwischen dem Terminal 6 und dem elektronischen Wertträger 2, wobei in einem ersten Schritt ein Authentifizieren zur Überprüfung der Identität und Authentizität deselektronischen Wertträgers 2 erfolgt. Hierzu sendet das Terminal 6 in einem ersten Schritt 29 eine Zufallszahl an den elektronisehen Wertträger 2. In dem elektronischen Wertträger 2 wird die Zufallszahl mit einem Schlüssel S verschlüsselt, zweiter Schritt 30 und dann als Antwortsignal an das Terminal 6 im Schritt 31 zurückgeschickt. In dem Terminal 6 wird das Antwortsignal mit dem Schlüssel S entschlüsselt, Schritt 32. Wird im Schritt 33 festgestellt, dass das entschlüsselte Antwortsignal mit der ursprünglichen gesendeten Zufallszahl übereinstimmt, ist der elektronische Wertträger 2 authentisiert, Schritt 34. Im anderen Fall wäre der elektronische Wertträger 2 nicht authentifiziert, Schritt 35, und damit die Nutzung des Nutzungsgerätes 7 abgewiesen.

Nach erfolgreicher Authentisierung im Schritt 34 erfolgt im nächsten Schritt 36 ein Auslesen des verschlüsselten Speicherbereiches 8 aus dem Speicher 14 des elektronischen Wertträgers 2 in den Speicher des Terminals 6. Der Inhalt des verschlüsselten Speicherbereiches 8 wird in dem Terminal 6 entschlüsselt, Schritt 37, und dann durch Vergleich 38 überprüft, ob die in dem verschlüsselten Speicherbereich 8 abgespeicherten Nutzungsmerkmale zulässig sind. Sind die Nutzungsmerkmale zulässig, wird der Einwegzähler 27, der als ein Einwegwertzähler ausgebildet ist, im Schritt 39 ausgelesen. In den nächsten Schritten wird zum einen im Schritt 40 überprüft, ob das Nutzungsgerät 7 zur Nutzung freigeschaltet ist, und im Schrift 41, ob der Inhalt des Einwegzählers 27 das erforderliche Guthaben zur Nutzung der Waschmaschine aufweist. Fallen die Vergleiche positiv aus, wird in einem weiteren Schritt 42 der Speicherinhalt des Einwegzählers 27 um eine Stufe bzw. um den vorgegebenen Geldbetrag verringert. Nachfolgend wird in Schritt 43 das Freigabesignal 9 an die Waschmaschine 5 gesendet, so dass diese zur Benutzung freigeschaltet ist. Fallen die Vergleiche 38, 40, 41 negativ aus, erfolgt kein Freigabesignal 9. an die Waschmaschine 7, so dass die Nutzung derselben abgelehnt wird, sondern ein Abweisungssignal 28.

Damit der Nutzer 3 über das Ergebnis des Freigabeprogramms 10 informiert wird, weist das Terminal 6 eine entsprechende Anzeige auf, die beispielsweise den Nutzer 3 im positiven Fall auffordert, die Waschmaschine 5 zu benutzen und über das Rest-Guthaben des Wertträgers 2 informiert.

Alternativ kann die Erfindung auch für die Nutzung anderer Dienstleistungen, beispielsweise Steuerung bzw. Freigabe von Duschen oder auch zur Abgabe von Waren genutzt werden. Der in dem Einwegzähler 27 abgespeicherte Waren- und/oder Dienstleistungswert kann in einer Geldwährung, als Anzahl (zum Beispiel 10 x Waschen, 20 x Kaffeetrinken) oder als Zeiteinheit (10 min. duschen bzw. ein Jahr freier Eintritt) abgespeichert sein. Als Anwendungsbereiche kommen in Frage: Miet-Waschmaschine/Trockner in Waschküchen, Kantinen für Schüler/Studenten, Firmen, Campingplätze (Strom/ Wasserversorgung, Entsorgung, Duschen etc.), Ferienparks, Waschstraßen (PKW- und LKW-Wäsche, Hochdruckreiniger, Sauger, Waschanlage, Stromtankstellen, Ladung der Autobatterie).

Nach einer nicht dargestellten alternativen Ausführungsform der Erfindung können in dem verschlüsselten Speicherbereich 8 auch mehrere Einwegzähler 27 vorgesehen sein, so dass eine Mehrfachnutzung des elektronischen Wertträgers 2, beispielsweise für den zeitlich begrenzten kostenlosen Zugang für Campingplätze sowie kostenpflichtige Nutzung der Duschen auf demselben (Campingplatz) gewährleistet ist.

Nach einer nicht dargestellten Ausführungsform der Erfindung kann der Einwegzähler 27 auch in einem nicht verschlüsselten Speicherbereich des Speichers 14 angeordnet sein.

Der Einwegzähler 27 ist nur in der Lage, in einer einzigen Richtung zu zählen, d. h. seinen Wert zu verändern. Nach der Erfindung ist mit der Änderung des Zählers stets eine Verringerung des Wertes des Speicherinhalts verbunden.

Das Terminal 6 kann nach einer weiteren Ausführungsform der Erfindung auch in dem Nutzungsgerät 5 integriert angeordnet sein.

Nach der dargestellten Ausführungsform der Erfindung ist der elektronische Wertträger 2 als eine Wertkarte ausgebildet, die beispielsweise das Format einer Kreditkarte oder eines anderen Formats aufweist. Diese Karte 2 weist ein Folieninlay auf, in dem ein Transponder integriert ist. Dieses Inlay ist zu beiden Seiten von Papierlagen umfasst, die durch Auflaminieren aufgebracht sind. Alternativ kann das Transponderinlay auch mit einem Kunststoffmaterial umgossen sein bzw. durch Laminieren mit Kunststoffschichten zu beiden Seiten versehen sein.

Nach einer alternativen Ausführungsform der Erfindung kann der elektronische Wertträger auch kreisscheibenförmig in der Größe einer Münze ausgebildet sein. Der kreisscheibenförmige elektronische Wertträger kann gegebenenfalls randseitig eine Bohrung aufweisen, an dem ein Befestigungsring, beispielsweise Metallring, angebracht ist, so dass der elektronische Wertträger als ein Anhänger fungieren kann. Alternativ kann der elektronische Wertträger auch als eine ellipsoidförmige oder rechteckförmige Scheibe ausgebildet sein, die an gegenüberliegenden Endbereichen Schlitze aufweist zum Durchziehen eines Bandes. In diesem Fall ist der Wertträger Bestandteil eines Armbandes.

Der Einwegspeicher kann alternativ auch als eine programmtechnisch erzeugte Zählfunktion ausgebildet sein. Zur Vermeidung von unerwünschten Manipulationen muss dieses Programm jedoch gesondert gesichert sein.

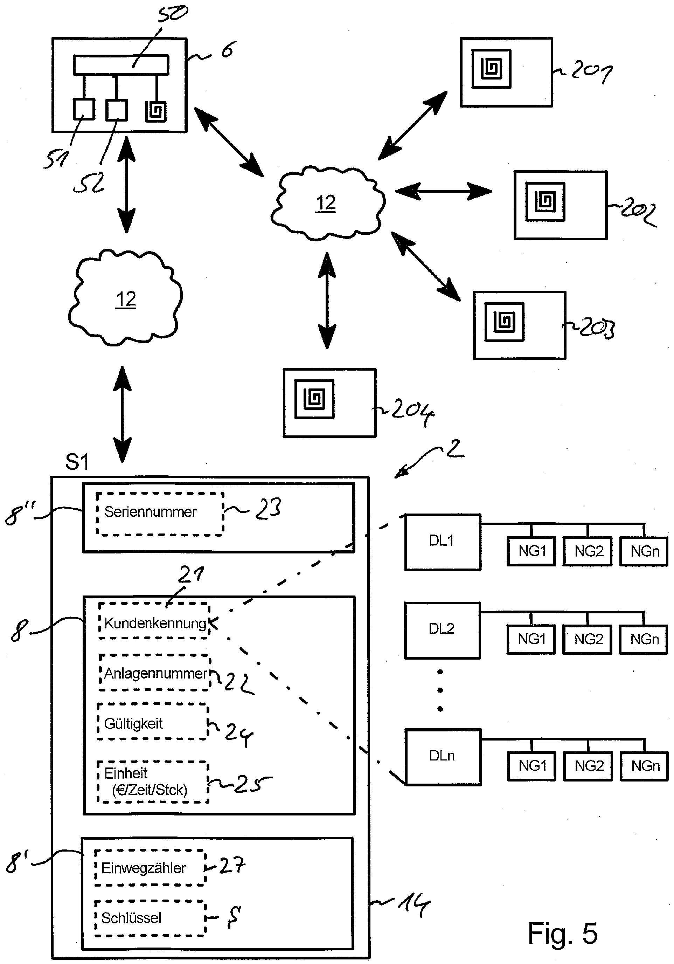

In Figur 5 ist ein bevorzugtes Wertträgersystem dargestellt, wobei in dem elektronischen Wertträger (Wertkarte 2) ein Dienstleisterkreis DL1, DL2, DLn und/oder ein Nutzungsgerätekreis NG1, NG2, NGn abgespeichert sind. Hierdurch wird ermöglicht, dass die Wertkarte 2 für unterschiedliche Dienstleister, beispielsweise Waschmaschinenbetreiber, gleichen oder unterschiedlichen Nutzungsgerätetyps genutzt werden kann. Beispielsweise kann die Wertkarte 2 genutzt werden für einen Dienstleister DL1, der als Nutzungsgerät NG1 eine Waschmaschine 5 auf dem Campingplatz A betreibt, und für einen Dienstleister DL2, der als Nutzungsgerät NG2 eine andere Waschmaschine 5 auf dem Campingplatz B betreibt.

Die Nutzungsgeräte NG1, NG2, NGn eines Dienstleisters DL1, DL2 oder DLn können sich beispielsweise dadurch unterscheiden, dass sie an unterschiedlichen Orten aufgestellt sind. Gegebenenfalls können die Nutzungsgeräte NG1, NG2, NGn auch eine unterschiedliche Funktion aufweisen, wie beispielsweise Waschmaschine, Trockner oder dergleichen. Das Nutzungsgerät NG1, NG2, NGn kann beispielsweise auch als Zugangskontrollgerät ausgebildet sein.

Der Dienstleisterkreis bzw. der Nutzungsgerätekreis und/oder die Berechtigungsinformationen, für welche Dienstleister DL1, DL2, DLn und/oder Nutzungsgeräte NG1, NG2, NGn derselben die Wertkarte 2 berechtigt ist einzusetzen, ist in dem Speicherbereich 8 des Speichers 14 der Wertkarte 2 abgespeichert. Mit Auslesen des Speicherbereiches 8 durch das Terminal 6 kann festgestellt werden, ob die Wertkarte 2 für das körperlich mit dem Terminal 6 verbundene Nutzungsgerät NG1 einsetzbar ist oder nicht. Das Terminal 6, das beispielsweise mit dem Nutzungsgerät NG1 (Waschmaschine 5) elektrisch und vorzugsweise mechanisch verbunden ist, hat in seinem eigenen Speicher den dem Nutzungsgerät NG1 zugewiesene Kennung desselben sowie dem Nutzungsgerät NG1 zugewiesenen Dienstleister DL1 abgespeichert. Das Terminal 6 weist eine Steuereinheit 50 mit dem Freigabeprogramm 10 auf, mittels dessen der aus dem Speicherbereich 8 der Wertkarte 2 ausgelesene erlaubte Dienstleisterkreis DL1, DL2, DLn und Nutzungsgerätekreis NG1, NG2, NGn ausgelesen wird. Beispielsweise durch eine Dienstleisterkreiskennung und eine Nutzungsgerätekreiskennung ist festgelegt, für welche Dienstleister DL1, DL2, DLn und Nutzungsgeräte NG1, NG2, NGn die Wertkarte 2 genutzt werden kann. In dem Terminal 6 bzw. ein durch die Steuereinheit 50 zugreifenden Speicher desselben ist die Kennung des mit dem Terminal 6 gekoppelten Nutzungsgerätes NG1 sowie die Kennung des Nutzungsgerätes NG1 betreibenden Dienstleisters DL abgespeichert. Durch Vergleich auf Übereinstimmung zwischen der in der Wertkarte 2 abgespeicherten Dienstleisterkreiskennung und Nutzungsgerätekennung und der in dem Terminal 6 abgespeicherten Dienstleisterkennung und Nutzungsgerätekennung in dem Terminal 6 selbst kann bestimmt werden, ob der Nutzer der Wertkarte 2 berechtigt ist, das Nutzungsgerät NG1 zu nutzen. Die Dienstleisterkennung bzw. die Nutzungsgerätekennung kann beispielsweise als High- oder Low-Wert im jeweiligen Speicher 8 der Wertkarte 2 bzw. Speicher des Terminals 6 abgespeichert sein. Beispielsweise können die erlaubten Dienstleister- und Nutzungsgerätekennwerte, die in der Wertkarte 2 abgespeichert sind, einen High-Wert bilden, während die nicht erlaubten Dienstleister- bzw. Nutzungsgerätekennwerte einen Low-Wert aufweisen. Die dem Nutzungsgerät NG1 zugewiesenen Kennwerte des Dienstleisterkreises und Nutzungsgerätekreises können ebenfalls mit einem High-Wert versehen sein, während die nicht zulässigen Kennwerte einen Low-Wert aufweisen. Die High-Werte der Kennungen für das in der Wertkarte 2 abgespeicherten Kennungen für den Nutzungsgerätekreis NG1, NG2, NGn und Dienstleisterkreis DL1, DL2, DLn bilden somit die Kundenkennung 21 der Wertkarte 2. Stimmt die in der Wertkarte 2 abgespeicherte Kundenkennung 21 mit der im Terminal 6 vorgegebenen Kundenkennung überein, erfolgt das Freigabesignal des Terminal 6, so dass das entsprechend mit dem Terminal 6 gekoppelte Nutzungsgerät NG1 zur Benutzung aktiviert wird. In dem Speicherbereich 8 der Wertkarte 2 sind darüber hinaus die Anlagenummer 22, die Gültigkeit 24 sowie die Einheiten 25 abgespeichert. In einem gesonderten Speicherbereich 8' ist der Einwegzähler 27 sowie der Schlüssel S für die Autorisierung der Wertkarte 2 gegenüber dem Terminal 6 abgespeichert. Die Seriennummer 23 der Wertkarte 2 ist in einem weiteren Speicherbereich 8" abgespeichert. Die Seriennummer 23 bildet im Übrigen eine Eingangsgröße für eine Funktion f₁, mittels derer ein Schlüssel S1 ermittelt wird, unter dem der Speicherbereich 8 sowie 8' der Wertkarte 2 verschlüsselt abgespeichert sind. Es versteht sich, dass in dem Terminal 6 ebenfalls der Schlüssel S1 gespeichert ist, so dass die aus der Wertkarte 2 ausgelesenen Daten entschlüsselt werden können.

Nach einer nicht dargestellten alternativen Ausführungsform der Erfindung kann der Speicherbereich 8 auch mit einem anderen Schlüssel verschlüsselt sein als der Speicherbereich 8'.

In der Einheitenkennung 25 der Wertkarte 2 sind Nutzungseinheitendaten abgespeichert, wie beispielsweise Euro, Stück, Zeit, so dass in Abhängigkeit von diesen Nutzungseinheitendaten das Nutzungsgerät 5 durch das Terminal 6 ansteuerbar ist.

Zur Freigabe des Nutzungsgerätes 5 steuert das Terminal mit 6 einem Steuersignal ein Relais an, das das Nutzungsgerät 5 einschaltet bzw. ausschaltet. Das Einschalten bzw. Ausschalten des Relais' erfolgt mittels der in dem Terminal 6 abgespeicherten Freigaberoutine 10.

Neben der Wertkarte 2 kann das Terminal 6 mit einer Programmierkarte 201 über die Funkschnittstelle 12 kommunizieren. Die Programmierkarte 201 ist als Transponderkarte ausgebildet. Sie weist eine Programmierkennung auf, die nach positiver Überprüfung durch das Terminal 6 die Einstellung von das Nutzungsgerät 5 betreffenden abrechnungsrelevanten Daten innerhalb des Terminals 6 ermöglicht. Beispielsweise könnte die Einheit 25 verändert werden, so dass beispielsweise die Nutzungsdauer pro Dekrementierstufe der Wertkarte 2 verringert wird.

Darüber hinaus kann eine Prüfkarte 202 vorgesehen sein, die über die Funkschnittstelle 12 mit dem Terminal 6 kommuniziert. Nach Überprüfung einer in der Prüfkarte 202 abgespeicherten Prüfkennung kann das Terminal 6 ein Freigabesignal zur Durchführung eines Testlaufes des Nutzungsgerätes 5 von beispielsweise einer Minute ermöglichen.

Als weitere Funktionskarte kann eine Kassenkarte 203 vorgesehen sein, die nach Überprüfung in derselben abgespeicherten Kassenkennung durch das Terminal 6 lediglich Kassenstände des Terminals 6 auslesen kann.

Darüber hinaus kann eine Nummernkarte 204 vorgesehen sein, mittels derer die dem Nutzungsgerät 5 zugewiesenen Kartennummern auslesbar sind.

Während die Wertkarte 2 die Nutzung der Waschmaschine 5 ermöglicht, dienen die Karten 201, 202, 203, 204 als Systemkarten, mittels derer Nutzungsgeräte bezogene Daten geändert bzw. ausgelesen werden können.

Das Terminal 6 weist zusätzlich eine Anzeigeeinheit 51 sowie eine Eingabeeinheit 52 auf, mittels einer der vorgenannten Karten 201, 202, 203 oder 204 die abrechnungsrelevanten Daten innerhalb des Terminals 6 verändert bzw. eingestellt werden können.

Gleiche Bauteile bzw. Bauteilfunktionen der Ausführungsbeispiele sind mit den gleichen Bezugsziffern versehen.

Es versteht sich, dass die vorstehend genannten Merkmale je für sich oder zu mehreren in beliebiger Kombination Verwendung finden können. Die beschriebenen Ausführungsbeispiele sind nicht als abschließende Aufzählung zu verstehen.

## Patentansprüche

1. System zur Freigabe einer Dienstleistung und/oder Waren für Nutzer (3) an einem Nutzungsgerät (5) mit einem elektronischen Wertträger (2) enthaltend einen Speicher (8, 8', 8") und eine Kommunikationsschnittstelle, mit einem Terminal (6) enthaltend eine Speicher- und eine Kommunikationsschnittstelle zur Kommunikation mit dem elektronischen Wertträger (2), **dadurch gekennzeichnet,**
- **dass** die Kommunikationsschnittstelle des elektronischen Wertträgers (2) und des Terminals (6) als eine Funkschnittstelle ausgebildet sind,
- **dass** das Terminal (6) derart ausgebildet ist, dass ein Freigabesignal zur Nutzung des Nutzungsgerätes (5) ausschließlich aufgrund der Kommunikation mit dem elektronischen Wertträger (2) erfolgt,
- **dass** der elektronische Wertträger (2) einen Einwegspeicher (27) mit einem Speicherinhalt aufweist, der ausschließlich wertmäßig und/oder zeitlich und/oder betragsmäßig in vorgegebene Stufen verringerbar ist zur Freigabe des Nutzungsgerätes (5),
- **dass** der Einwegspeicher (27) in einem verschlüsselten Speicherbereich (8') des Speichers (14) abgespeichert ist,
- **dass** in dem Speicher (14) eine Kundenkennung (21) abgespeichert ist, die einem vorgegebenen Dienstleisterkreis (DL1, DL2, DLn) und/oder einem vorgegebenen Nutzungsgerätekreis (NG1, NG2, NGn) zugeordnet ist,
- **dass** das Terminal (6) Mittel aufweist, derart, dass das Freigabesignal zur Nutzung des Nutzungsgerätes (5) von dem Terminal (6) an das Nutzungsgerät (5) in Abhängigkeit von einem übereinstimmenden Vergleich der von der elektrischen Wertträger (2) ausgelesenen Kundenkennung (21) mit einer in dem Terminal (6) abgespeicherten Kundenkennung abgesandt wird.

2. System nach Anspruch 1, **dadurch gekennzeichnet, dass** das das Terminal (6) Mittel zur Authentifizierung des elektronischen Wertträgers (2) aufweist, wobei eine Zufallszahl in dem Terminal (6) erzeugbar ist, die an den elektronischen Wertträger (2) gesendet wird, und wobei in dem elektronischen Wertträger (2) die Zufallszahl mit einem Schlüssel (S) verschlüsselt wird, und dass der elektronische Wertträger (2) derart ausgebildet ist, dass als Antwortsignal die mit dem Schlüssel (S) verschlüsselte Zufallszahl an das Terminal (6) gesendet wird, und dass das Terminal (6) derart ausgebildet ist, dass die von der elektronischen Wertkarte (2) erhaltene verschlüsselte Zufallszahl mit dem in dem Terminal (6) abgespeicherten Schlüssel (S) entschlüsselt wird und überprüft wird, ob die entschlüsselte Zufallszahl mit der ursprünglich gesendeten Zufallszahl übereinstimmt..

3. System nach Anspruch 1 oder 2, **dadurch gekennzeichnet, dass** in dem verschlüsselten Speicherbereich (8) des elektronischen Wertträgers (2) und des Terminals (6) der zulässige Dienstleisterkreis (DL1, DL2, DLn) und/oder zulässige Nutzungsgerätekreis (NG1, NG2, NGn) abgespeichert ist.

4. System nach einem der Ansprüche 1 bis 3, **dadurch gekennzeichnet, dass** in dem Speicher (14) der elektronischen Wertkarte (2) Nutzungseinheitendaten (25) abgespeichert sind, so dass in Abhängigkeit von vorgegebenen Nutzungseinheitendaten (25) das Nutzungsgerät (5) durch das Terminal (6) ansteuerbar ist.

5. System nach einem der Ansprüche 1 bis 4, **dadurch gekennzeichnet, dass** der Einwegspeicher (27) und die Kundenkennung (21) in unterschiedlichen und mit gleichen oder unterschiedlichen Schlüsseln geschützten Speicherbereichen (8, 8') abgespeichert sind.

6. System nach einem der Ansprüche 1 bis 5, **dadurch gekennzeichnet,**
- **dass** eine Programmierkarte (201) mit einer Programmierkennung vorgesehen ist,
- **dass** in dem Speicher des Terminals (6) eine Programmierkennung abgespeichert ist, so dass nach Auslesen der Programmierkennung aus der Programmierkarte (201) und Überprüfung derselben auf Übereinstimmung mit der in dem Terminal (6) abgespeicherten Programmierkennung ein Freigabesignal zur Einstellung von abrechnungsrelevanten Daten in dem Terminal (6) erzeugt wird.

7. System nach einem der Ansprüche 1 bis 6, **dadurch gekennzeichnet, dass** eine Prüfkarte (202) mit einem Speicher und einer Prüfkennung vorgesehen ist, dass in dem Speicher des Terminals (6) die Prüfkennung abgespeichert ist, dass das Terminal (6) ein Freigabesignal durch Durchführung eines Testlaufs an dem Nutzungsgerät (5) bei erfolgreichem Vergleich der aus der Prüfkarte (202) ausgelesene Prüfkennung mit der in dem Terminal (6) gespeicherten Prüfkennung erfolgt.

8. System nach einem der Ansprüche 1 bis 7, **dadurch gekennzeichnet, dass** eine Kassenkarte (203) mit einer abgespeicherten Kassenkennung vorgesehen ist, dass der Speicher des Terminals (6) die Kassenkennung aufweist, dass das Terminal ein Freigabesignal zum Auslesen von Kassenständen bei erfolgreichem Vergleich der aus der von der Kassenkarte (203) ausgelesenen Kassenkennung mit dem in dem Terminal (6) gespeicherten Kassenkennung erfolgt.

9. Elektronischer Wertträger eines Systems zur Freigabe einer Dienstleistung für Nutzung (3) nach einem der Ansprüche 1 bis 8 mit einem Speicher (14) zur Speicherung eines vorgegebenen Speicherinhalts, **dadurch gekennzeichnet, dass** der Speicher (14) des elektronischen Wertträgers 2 zusammen mit einem Mikroprozessor (13) in einem Chip verbaut ist, der mit einem Chip verbaut ist, der mit einer RFID-Antenne (15) elektrisch verbunden ist zur Bildung eines Transponders.

10. Elektronischer Wertträger nach Anspruch 9, **dadurch gekennzeichnet, dass** der Einwegspeicher (27) des elektronischen Wertträgers (2) als ein ausschließlich dekremental wirkender Einwegzähler ausgebildet ist.

11. Terminal für ein System zur Freigabe einer Dienstleistung für Nutzer (3) nach einem der Ansprüche 1 bis 8, **dadurch gekennzeichnet, dass** das Terminal (6) eine Anzeigeeinheit (51) zur Darstellung von Informationen und einer manuellen Eingabeeinheit (52) zur Einstellung von abrechnungsrelevanten Daten des Nutzungsgerätes (NG1, NG2, NGn) aufweist.

12. Verfahren zur Freigabe einer Dienstleistung für Nutzer (3) an einem Nutzungsgerät (5, NG1, NG2, NGn), wobei ein Terminal (6) mit einem elektronischen Wertträger (2) kommuniziert, **dadurch gekennzeichnet,**
- **dass** zuerst eine Authentifizierungsprüfung zwischen dem Terminal (6) und der elektrischen Wertkarte (2) durchgeführt wird,
- **dass** nach positiver Authentifizierung in einem zweiten Schritt eine in der elektrischen Wertkarte (2) gespeicherte Kundenkennung (21)
- von dem Terminal (6) ein Freigabesignal (9) an das Nutzungsgerät (5, NG1, NG2, NGn) abgesandt wird zur freien Nutzung desselben und
- der Einwegzähler (27) der elektronischen Wertkarte (2) eine Stufe dekrementiert wird.
